# FASCICULE DE BREVET EUROPEEN

(11) **EP 2 825 438 B1**
(45) Date de publication et mention de la délivrance du brevet: **09.03.2016**
(21) Numéro de dépôt: 13715305.2
(22) Date de dépôt: 12.03.2013
(51) Int. Cl.: B62D 5/04

(54) **PROCÉDÉ DE CONTRÔLE DE FIN DE COURSE POUR DIRECTION ASSISTÉE ÉLECTRIQUE**
VERFAHREN ZUR STEUERUNG EINES FAHRTENDES FÜR SERVOLENKUNG
METHOD FOR CONTROLLING END-OF-TRAVEL FOR POWER-ASSISTED STEERING

(30) Priorité: 15.03.2012 FR 1252324
(43) Date de publication de la demande: 21.01.2015
(73) Titulaire: JTEKT Europe, 69540 Irigny (FR)
(72) Inventeur: GUILEMOND, Alain, F-69970 Marennes (FR); MORETTI, Romain, F-69510 Soucieu En Jarrest (FR)
(74) Mandataire: Chevalier, Renaud Philippe
(86) Numéro de dépôt international: PCT/FR2013/050516
(87) Numéro de publication internationale: WO 2013/136009

(56) Documents cités:
- WO-A2-2007/093875
- DE-A1-102007 024 489
- DE-A1-102010 032 043
- FR-A1- 2 811 628
- US-B1- 6 408 235

## Description

La présente invention concerne, de façon générale, les systèmes de direction des véhicules automobiles, et plus particulièrement les directions assistées électriques. Encore plus particulièrement, cette invention se rapporte à un procédé qui, dans de tels systèmes de direction, réalise un contrôle de fin de course de la crémaillère, notamment dans le but de limiter les chocs et les bruits lorsque la direction parvient en butée de braquage.

Une direction assistée électrique de véhicule automobile possède un moteur électrique d'assistance, par lequel un couple ou une force, amplifiant l'effort exercé manuellement par le conducteur du véhicule sur le volant, est appliqué sur la colonne de direction ou sur le pignon de direction, ou encore directement sur la crémaillère. Lorsque la fonction d'assistance est sollicitée, un courant électrique d'intensité plus ou moins importante parcourt les enroulements du moteur électrique d'assistance, l'intensité de ce courant électrique étant fonction de divers paramètres, selon des « lois d'assistance » prédéfinies.

Dans certaines circonstances de conduite ou de manoeuvre d'un véhicule automobile, la crémaillère vient heurter une butée mécanique de fin de course, avec une vitesse relativement élevée. Il en résulte un choc et un bruit. En fait, l'atteinte de la butée mécanique provoque une décélération très brutale, la vitesse de la crémaillère passant d'une valeur importante à une valeur nulle sur une très faible distance, ce qui correspond à une excitation vibratoire du système de direction, à l'image d'un « coup de marteau ».

Ces effets indésirables sont amplifiés dans le cas d'une direction assistée, si les lois d'assistance ne sont pas adaptées à une telle situation d'arrivée en fin de course.

Le brevet français FR 2 810 614 propose déjà de contrôler électroniquement l'intensité maximale du courant électrique parcourant le moteur d'assistance, en fonction de la valeur de l'angle de rotation du volant ou d'une grandeur équivalente fournie par un capteur, de manière à réduire ou limiter cette intensité maximale lorsque la direction parvient en butée de braquage.

Plus particulièrement, le brevet français FR 2 810 614 prévoit qu'un dispositif de contrôle électronique, en particulier un calculateur électronique, fait diminuer l'intensité maximale du courant électrique parcourant le moteur d'assistance en fonction de l'angle de rotation du volant ou d'une grandeur équivalente, selon une courbe programmée. Cette intensité maximale peut ainsi décroître de façon continue, au-delà d'un angle de rotation prédéterminé du volant, jusqu'à une valeur réduite appliquée lorsque la butée de braquage est atteinte.

Ce procédé connu vise, en particulier, à réduire l'intensité du courant électrique parcourant le moteur d'assistance, lorsque la position de fin de course est maintenue, de manière à préserver le moteur d'assistance en évitant un échauffement excessif de ce dernier. Par contre, un tel procédé ne prend pas en considération des paramètres dynamiques tels que la vitesse de rotation du volant, afin de réduire aussi les chocs et bruits en fin de course.

Le brevet US 6 408 235 divulgue un procédé analogue, dans lequel non seulement l'angle de rotation du volant, mais aussi la vitesse angulaire du volant peuvent être pris en compte, la vitesse angulaire réelle étant comparée à une vitesse angulaire « cible » et le couple d'assistance étant adapté en fonction de l'écart de ces vitesses, dans un asservissement en boucle fermée. Les chocs en fin de course peuvent ainsi être réduits, dans une certaine mesure.

La présente invention vise à améliorer les procédés connus, rappelés ci-dessus, de manière à mieux réduire encore les chocs et les bruits en fin de course, en exerçant une action mieux adaptée aux situations concrètes rencontrées.

A cet effet, l'invention a pour objet un procédé de contrôle de fin de course, pour une direction à crémaillère de véhicule automobile à assistance électrique, procédé dans lequel l'intensité maximale du courant électrique parcourant le moteur électrique d'assistance est contrôlée pour adapter le couple d'assistance, à l'approche des positions de fin de course de la crémaillère, de manière à réduire les chocs et bruits lorsque la direction parvient en butée de braquage, ce procédé étant essentiellement caractérisé par le fait que le contrôle du couple d'assistance, à l'approche des positions de fin de course, est réalisé ou activé en fonction de paramètres incluant la valeur de l'accélération de la rotation du volant de conduite, et en contrôlant le couple d'assistance de manière à cibler une valeur ou un profil de décélération de la rotation du volant de conduite.

Ainsi, le principe de l'invention repose sur une régulation en cible de décélération, plutôt qu'en position ou en vitesse, ce qui permet :
- d'une part, d'agir plus tôt et d'être plus efficace dans le cas où le conducteur du véhicule tend à accélérer le mouvement de rotation du volant vers la butée ;
- d'autre part, d'exercer une action plus lissée et plus douce, procurant un ressenti plus naturel du mouvement par le conducteur.

En particulier, le procédé objet de l'invention ne modifie en rien le ressenti du conducteur si ce dernier effectue un braquage loin de la butée ou s'il le fait à l'approche de la butée mais de façon suffisamment douce, donc sans accélération violente. Ainsi, la manoeuvre du volant n'est pas « alourdie » inutilement.

Dans un mode de mise en oeuvre préféré du procédé de l'invention, la fonction spécifique de contrôle du couple d'assistance, à l'approche des positions de fin de course, est activée en cas d'accélération de la rotation du volant supérieure à une valeur de seuil, et en court-circuitant une boucle principale de contrôle de couple de l'assistance.

En d'autres termes, la fonction spécifique de l'invention est mise en oeuvre par une boucle indépendante, et ne s'assimile pas à une simple modulation du couple d'assistance initialement déterminé (il ne s'agit pas d'une multiplication du couple d'assistance par un coefficient pondérateur, comme décrit dans le brevet précité FR 2 810 614). De plus, l'action de cette boucle indépendante, autrement dit la fonction spécifique de l'invention, peut être avantageusement basée sur le couple d'assistance mesuré, notamment au moment de l'entrée en action de cette fonction.

Ceci permet, en cas de besoin, d'annuler complètement l'assistance et même de produire éventuellement une contre-assistance, pour être efficace dans tous les cas, du point de vue de la réduction des chocs et bruits en fin de course (ce qui n'est pas possible avec une simple multiplication par un coefficient pondérateur). En particulier, l'efficacité de l'action « anti-bruit » est la même en cas de haute adhérence et en cas de basse adhérence, par exemple sur de la neige. L'action reste identique, quelles que soient les lois de la boucle d'assistance principale et quelle que soit la valeur des efforts appliqués par le train de roulement du véhicule sur les biellettes de direction. Une telle indépendance de la fonction facilite aussi sa mise au point et son adaptation.

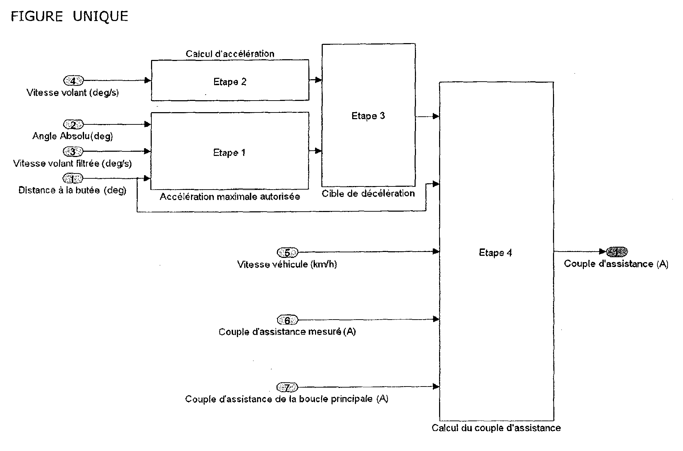

De toute façon, l'invention sera mieux comprise à l'aide de la description qui suit, en référence au dessin schématique annexé dont l'unique figure illustre, à titre d'exemple, un mode de mise en oeuvre du procédé de contrôle de fin de course objet de l'invention.

Le procédé de l'invention comprend une étape préalable (non illustrée) de détermination des positions des deux butées mécaniques de fin de course de la crémaillère, par calcul de la distance absolue par rapport à la butée dont la crémaillère est la plus proche, à partir d'une information de position fournie par un codeur associé au moteur électrique d'assistance, ou par un capteur de position angulaire du volant de conduite ou de la colonne de direction.

Plus particulièrement, dans le cas où l'on dispose d'une information de position angulaire absolue du volant provenant d'un capteur externe à la direction, tel qu'un capteur placé sur la colonne de direction, on exploite cette information d'angle absolu en enregistrant lors des premières utilisations du véhicule, à l'occasion de manoeuvres de celui-ci, la plus grande et la plus petite des valeurs angulaires balayées. Lorsque la différence entre la plus grande valeur et la plus petite valeur atteint une valeur qui correspond à la course totale connue de la crémaillère, puisqu'il s'agit d'une grandeur précise définie par les dimensions du carter de direction, on détermine la moyenne de la plus grande valeur et de la plus petite valeur et on enregistre cette moyenne comme décalage ou correction à appliquer à l'angle du volant ou de la colonne de direction, ce décalage angulaire correspondant à un décalage en distance (correction à appliquer à la distance de la crémaillère relativement aux deux butées de fin de course).

Si l'on dispose seulement de l'angle relatif fourni par un codeur associé au moteur électrique d'assistance, une fonction spécifique permet de détecter, après chaque démarrage du véhicule, si la crémaillère arrive en butée, ceci par observation simultanée de plusieurs informations significatives : couple au niveau de la barre de torsion supérieur à un seuil, vitesse de rotation du volant inférieure à un seuil et gradient angulaire du couple au niveau de la barre de torsion. Si les conditions requises sont remplies, on connaît les positions de butée donc aussi le décalage éventuel de l'angle de butée réel par rapport à l'angle relatif fourni par le codeur. Ainsi on peut reconstituer la distance angulaire ou linéaire de la crémaillère par rapport à une butée de fin de course.

Cette étape préliminaire étant réalisée, le procédé proprement dit se déroule selon les étapes décrites ci-après.

Dans une première étape, à l'aide d'une table de valeurs et à partir de l'information de distance de la crémaillère par rapport à la butée mécanique, ainsi que de l'information de vitesse de rotation du volant actuelle, on identifie l'accélération maximale autorisée pour la rotation du volant, telle que la vitesse du volant soit inférieure à une vitesse maximale souhaitée à l'arrivée en butée pour éviter le bruit, en respectant un profil de décélération doux pour le ressenti du conducteur.

Dans une deuxième étape, on calcule l'accélération actuelle du volant, à partir de l'information de vitesse de rotation du volant actuelle, pouvant être fournie avec une grande précision, avec peu de bruit de mesure et avec un échantillonnage rapide par un codeur associé au moteur électrique d'assistance.

Dans une troisième étape, l'accélération actuelle du volant (obtenue à la deuxième étape) est comparée à l'accélération maximale autorisée (obtenue à la première étape), pour obtenir un écart qui est converti, via des gains, en une cible de décroissance du couple d'assistance sur un pas de temps.

Dans une quatrième étape, on vérifie si on remplit des conditions d'autorisation d'activation de la fonction, à savoir :
- en première condition : que la distance absolue de la crémaillère par rapport à la butée mécanique soit inférieure à une valeur de seuil (autrement dit : la fonction est active seulement dans une zone « proche de la butée ») ;
- en deuxième condition : que la vitesse du véhicule soit inférieure à une valeur de seuil (autrement dit : la fonction est active seulement dans des conditions de basse vitesse du véhicule).

Si ces deux conditions sont simultanément réunies, on détermine une valeur d'assistance maximale donnée par le couple d'assistance actuel, auquel on soustrait la cible de décroissance du couple d'assistance obtenue à la troisième étape. La branche de calcul de cette valeur d'assistance maximale est indépendante de la branche principale de contrôle du couple d'assistance. La cible d'assistance issue de la branche principale est alors saturée à la valeur maximale précitée et cette nouvelle cible d'assistance est transmise au moteur électrique d'assistance.

La figure unique du dessin annexée illustre, de façon simplifiée, le procédé de l'invention avec ses quatre étapes précédemment décrites.

Comme il va de soi, l'invention ne se limite pas au seul mode de mise en oeuvre décrit ci-dessus. Elle en embrasse, au contraire, toutes les variantes qui respectent la portée des revendications, quelles que soient notamment la nature et la position des capteurs utilisés pour l'obtention des informations à exploiter.

## Revendications

1. Procédé de contrôle de fin de course, pour une direction à crémaillère de véhicule automobile à assistance électrique, dans lequel l'intensité maximale du courant électrique parcourant le moteur électrique d'assistance est contrôlée pour adapter le couple d'assistance, à l'approche des positions de fin de course de la crémaillère, de manière à réduire les chocs et bruits lorsque la direction parvient en butée de braquage, **caractérisé en ce que** le contrôle du couple d'assistance, à l'approche des positions de fin de course, est réalisé ou activé en fonction de paramètres incluant la valeur de l'accélération de la rotation du volant de conduite, et en contrôlant le couple d'assistance de manière à cibler une valeur ou un profil de décélération de la rotation du volant de conduite.

2. Procédé de contrôle de fin de course selon la revendication 1, **caractérisé en ce que** la fonction spécifique de contrôle du couple d'assistance, à l'approche des positions de fin de course, est activée en cas d'accélération de la rotation du volant supérieure à une valeur de seuil, et en court-circuitant une boucle principale de contrôle de couple de l'assistance.

3. Procédé de contrôle de fin de course selon la revendication 2, **caractérisé en ce que** ladite fonction spécifique est basée sur le couple d'assistance mesuré, notamment au moment de l'entrée en action de cette fonction.

4. Procédé de contrôle de fin de course selon la revendication 2 ou 3, **caractérisé en ce que** ladite fonction spécifique est activée seulement si la vitesse du véhicule est inférieure à une valeur de seuil.

5. Procédé de contrôle de fin de course selon l'une quelconque des revendications 1 à 4, **caractérisé en ce qu'**il comprend une étape préalable de détermination des positions des deux butées mécaniques de fin de course de la crémaillère, par calcul de la distance absolue par rapport à la butée dont la crémaillère est le plus proche, à partir d'une information de position fournie par un codeur associé au moteur électrique d'assistance, ou par un capteur de position angulaire du volant de conduite ou de la colonne de direction.

## Patentansprüche

1. Endlagenkontrollverfahren für eine elektrisch unterstützte Zahnstangenlenkung eines Kraftfahrzeugs, wobei die maximale Stromstärke des durch den elektrischen Unterstützungsmotor fließenden Stroms kontrolliert wird, um das Unterstützungsmoment bei der Annäherung an die Endlagen der Zahnstange anzupassen, um die Stöße und Geräusche zu verringern, wenn die Lenkung den Lenkendanschlag erreicht, **dadurch gekennzeichnet, dass** die Kontrolle des Unterstützungsmoments bei der Annäherung an die Endlagen in Abhängigkeit von Parametern durchgeführt oder aktiviert wird, die den Beschleunigungswert für die Lenkraddrehung enthalten, sowie durch das Kontrollieren des Unterstützungsmoments, um einen Verzögerungswert oder ein Verzögerungsprofil der Lenkraddrehung zu bestimmen.

2. Endlagenkontrollverfahren nach Anspruch 1, **dadurch gekennzeichnet, dass** die spezielle Kontrollfunktion des Unterstützungsmoments bei der Annäherung an die Endlagen im Falle einer Beschleunigung der Lenkraddrehung über einen Grenzwert hinaus, und durch Überbrücken einer Hauptkontrollschleife für das Unterstützungsmoment aktiviert wird.

3. Endlagenkontrollverfahren nach Anspruch 2, **dadurch gekennzeichnet, dass** die besagte spezielle Funktion auf dem gemessenen Unterstützungsmoment, vor allem zum Zeitpunkt des Inkrafttretens dieser Funktion basiert.

4. Endlagenkontrollverfahren nach Anspruch 2 oder 3, **dadurch gekennzeichnet, dass** die besagte spezielle Funktion nur dann aktiviert wird, wenn die Geschwindigkeit des Fahrzeugs unter einem Grenzwert liegt.

5. Endlagenkontrollverfahren nach irgendeinem der Ansprüche 1 bis 4, **dadurch gekennzeichnet, dass** es einen vorbereitenden Schritt zur Bestimmung der Positionen der beiden mechanischen Endlagenanschläge der Zahnstange durch Berechnen der absoluten Distanz im Verhältnis zum Anschlag umfasst, dem die Zahnstange am nächsten liegt, ausgehend von einer Positionsinformation, die durch einen Geber bereitgestellt wird, der dem elektrischen Unterstützungsmotor zugeordnet ist, oder durch einen Winkelpositionssensor des Lenkrades oder der Lenksäule.

## Claims

1. An end-of-stroke control method for a rack-type steering of an electrically assisted motor vehicle, wherein the maximum intensity of the electric current flowing in the assistance electric motor is controlled to adapt the assistance torque, when approaching the end-of-stroke positions of the rack, so as to reduce shocks and noises when the steering reaches the steering stop, **characterized in that** the control of the assistance torque, when approaching the end-of-stroke positions, is carried out or activated depending on settings including the acceleration value of the rotation of the steering wheel, and by controlling the assistance torque so as to target a value or a deceleration profile of the rotation of the steering wheel.

2. The end-of-stroke control method according to claim 1, **characterized in that** the specific function of controlling the assistance torque, when approaching the positions of end-of-stroke, is activated in case the acceleration of the rotation of the steering wheel is higher than a threshold value, and by short-circuiting a main control loop of the assistance torque.

3. The end-of-stroke control method according to claim 2, **characterized in that** said specific function is based on the measured assistance torque, in particular at the time when this function starts to operate.

4. The end-of-stroke control method according to claim 2 or 3, **characterized in that** said specific function is activated only if the speed of the vehicle is lower than a threshold value.

5. The end-of-stroke control method according to any one of claims 1 to 4, **characterized in that** it comprises a prior step of determining the positions of the two end-of-stroke mechanical stops of the rack, by calculating the absolute distance relative to the stop whose rack is the closest, from a position information provided by an encoder associated with the assistance electric motor, or by an angular position sensor of the steering wheel or the steering column.
